# EUROPEAN PATENT APPLICATION

(11) **EP 4 656 597 A1**
(43) Date of publication of application: **03.12.2025**
(21) Application number: 24758687.8
(22) Date of filing: 06.06.2024
(51) Int. Cl.: C01B 25/37, H01M 4/58, H01M 10/0525

(54) **LOW-IMPURITY FERRIC PHOSPHATE, AND PREPARATION METHOD THEREFOR AND USE THEREOF**

(30) Priority: 11.04.2024 CN 202410432820
(71) Applicant: Hubei Hongrun High-Tech New Materials Co., Ltd., Ezhou, Hubei 436070 (CN)
(72) Inventor: XU, Shanwan, Ezhou, Hubei 436070 (CN); GUO, Miyan, Ezhou, Hubei 436070 (CN); ZHANG, Wei, Ezhou, Hubei 436070 (CN); HAN, Jie, Ezhou, Hubei 436070 (CN)
(74) Representative: Barker Brettell LLP
(86) International application number: PCT/CN2024/097843
(87) International publication number: WO 2025/213559

(57) **Abstract**

This disclosure provides low-impurity ferric phosphate, and a preparation method and application thereof, and belongs to the field of preparation of high-purity ferric phosphate. The preparation method includes: mixing wet-process phosphoric acid and water to obtain a phosphoric acid solution, regulating a pH of the phosphoric acid solution, performing heating and aging to obtain an aged slurry, filtering the aged slurry to obtain a phosphate solution, and adding water and a first oxidant to obtain a phosphate aqueous solution containing the first oxidant; mixing a ferrous sulphate solution and the phosphate aqueous solution containing the first oxidant to obtain a first slurry; performing heating and aging, and adding a second oxidant to the first slurry after the first slurry changes color, so as to obtain a second slurry; and performing solid-liquid separation on the second slurry, and washing, drying, and sintering an obtained solid material in turn, so as to obtain the low-impurity ferric phosphate. In this disclosure, the wet-process phosphoric acid is used as a raw material, such that phosphorus utilization in the wet-process phosphoric acid is greatly increased, and the prepared anhydrous ferric phosphate has a low impurity content.

## Description

This disclosure claims priority to Chinese Patent Application No. 202410432820.1 filed on April 11, 2024, the disclosure of which is hereby incorporated by reference in its entirety.

### Technical Field

This disclosure relates to the technical field of new energy, and specifically to low-impurity ferric phosphate, and a preparation method and application thereof.

### Background

At present, a mainstream process route for preparing ferric phosphate includes the following three methods:
(1) A sodium method: sodium hydroxide, phosphoric acid, and hydrogen peroxide are mixed to form a mixed solution, and then the mixed solution is dropwise added to a ferrous iron compound solution, so as to prepare ferric phosphate.
(2) An ammonium method: ammonium dihydrogen phosphate or diammonium hydrogen phosphate and a hydrogen peroxide solution are mixed to form a mixed solution, and then the mixed solution is dropwise added to a ferrous iron compound solution, so as to prepare the ferric phosphate.
(3) An iron method: high-purity phosphoric acid and iron are used to prepare a ferrous dihydrogen phosphate solution, then a hydrogen peroxide is used as an oxidant and a precipitation agent to prepare ferric phosphate.

Most of the aforementioned industry mainstream ferric phosphate synthesis methods use wet-process phosphoric acid as a raw material. However, the wet-process phosphoric acid contains a large number of impurity elements such as Al, Mg, Mn, Zn, etc., impurities in the wet-process phosphoric acid needs to be removed before the ferric phosphate is prepared. In an impurity removal process, a large amount of phosphorus and impurity cations tend to produce phosphate precipitates that are filtered out, resulting in low comprehensive utilization of phosphorus, and thus wasting phosphorus resources.

Therefore, it is urgent to develop a preparation method with low costs and low phosphorus losses, which can significantly improve phosphorus utilization while obtaining high-purity ferric phosphate.

In view of this, this disclosure is especially proposed.

### Summary

In view of the technical problems in the Background, this disclosure provides low-impurity ferric phosphate, and a preparation method and application thereof, so as to ensure that phosphorus losses are reduced while the purity of ferric phosphate products is ensured, thereby improving phosphorus utilization.

In a first aspect, an embodiment of this disclosure provides a method for preparing low-impurity ferric phosphate, including the following operations: mixing wet-process phosphoric acid and water to obtain a phosphoric acid solution, regulating a pH of the phosphoric acid solution to 2.0-3.0, and then performing heating and aging to obtain an aged slurry; filtering the aged slurry to obtain a phosphate solution, and then adding water and a first oxidant to obtain a phosphate aqueous solution containing the first oxidant; mixing a ferrous sulphate solution and the phosphate aqueous solution containing the first oxidant to obtain a first slurry; performing heating and aging on the first slurry, and adding a second oxidant to the first slurry after the first slurry changes color, so as to obtain a second slurry; and performing solid-liquid separation on the second slurry to obtain a solid material, and washing, drying, and sintering the solid material in turn, so as to obtain the low-impurity ferric phosphate.

In the technical solution of the embodiment of this disclosure, the wet-process phosphoric acid is used as a raw material, the wet-process phosphoric acid and the water are mixed to obtain the phosphoric acid solution, the pH value of the phosphoric acid solution is regulated to 2.0-3.0, then heating and aging is performed, and aluminum is deposited first by using a solubility product difference between ferric phosphate and aluminum phosphate, such that the purpose of removing the aluminum is achieved. However, the prepared phosphate solution still contains magnesium and manganese impurities, then an oxidant is added to oxidize ferrous iron ions in two steps, precipitation of Mg and Mn is suppressed by an existing of ferric ions with trace amounts in a system using a stepwise oxidation scheme, such that the utilization rate of phosphorus in the wet-process phosphoric acid is greatly improved, and the prepared anhydrous ferric phosphate has a low impurity content. Furthermore, compared to the method that using high-purity monoammonium phosphate/diammonium phosphate or phosphoric acid as a phosphorus source in the related art, the wet-process phosphoric acid used in the embodiment of this disclosure is lower in cost, such that a process cost can be significantly reduced.

In some embodiments, the first oxidant and the second oxidant are both independently selected from one of hydrogen peroxide, ammonium persulfate, and sodium persulfate.

In the technical solution of the embodiment of this disclosure, the provided first oxidant and second oxidant are easy to obtain, and suitable for oxidizing the ferrous iron ions.

In some embodiments, a molar ratio of the first oxidant to ferrous ions in the ferrous sulphate solution is (0.7-0.9):2.

And/or, a molar ratio of the second oxidant dropwise added to the first slurry to the ferrous ions in the ferrous sulphate solution is (0.2-0.5):2.

A molar ratio of total amount of the first oxidant and the second oxidant to the ferrous ions in the ferrous sulphate solution is (1.1-1.4):2.

In these embodiments, by regulating and controlling addition amounts of the first oxidant and the second oxidant in two-step oxidation, the amount of the first oxidant is 0.7-0.9 times a total amount of fully-oxidized ferrous iron, the amount of the second oxidant is 0.2-0.5 times the total amount of fully-oxidized ferrous iron, at the same time, a total amount of the oxidant added twice is controlled to be slightly greater than a theoretical amount, such that a reaction process is controlled more accurately, so as to fully convert the ferrous iron into ferric iron, and introduction of manganese and magnesium in a product is reduced at the same time.

In some embodiments, the step of obtaining the aged slurry from the wet-process phosphoric acid includes the following operations: mixing the wet-process phosphoric acid and water to obtain the phosphoric acid solution containing phosphorus with a mass fraction being 5% to 10%; and regulating a pH value of the phosphoric acid solution to 2.0-3.0, and then performing heating and aging to obtain the aged slurry.

In these embodiments, for the phosphoric acid solution, by regulating and controlling a concentration of the phosphoric acid solution, aluminum impurities may be fully removed after heating and aging, such that aluminum ions may be prevented from entering a ferrous iron oxidation stage and interfering with the formation of ferric iron precipitates, thereby reducing the introduction of impurity elements in the product ferric phosphate.

In some embodiments, a temperature for heating and aging is 85 °C-95 °C, and a time for heating and aging is 1 h-4 h.

In these embodiments, by accurately controlling an operation temperature and an aging time for heating and aging, the aluminum may be fully deposited, thereby achieving a better aluminum removal effect.

In some embodiments, in the phosphate aqueous solution containing the first oxidant, a molar concentration of phosphate is 1.0 mol/L-2.5 mol/L.

In these embodiments, by regulating and controlling a concentration of the phosphate aqueous solution, a reaction rate during the synthesis of the ferric phosphate is controlled, so as to control the reaction rate to not be too fast, thereby improving product uniformity.

In some embodiments, an addition time for adding the phosphate aqueous solution containing the first oxidant to the ferrous sulphate solution is 10 min-60 min, and a reaction continues to be performed for 10 min-60 min after addition is completed.

In these embodiments, the ferrous sulphate solution is used as a base solution, a reaction is performed by means of dropwise adding the phosphate aqueous solution, and the first oxidant is slowly added, such that the reaction rate is controlled, and the ferric phosphate is uniformly precipitated.

In some embodiments, the step of obtaining the second slurry from the first slurry includes: performing heating and aging on the first slurry, where an aging temperature is 80 °C -95 °C; and dropwise adding the second oxidant to the first slurry after the first slurry changes color, and holding the first slurry at a temperature for 30 min-90 min to obtain the second slurry.

In these embodiments, the first slurry is heated and aged for crystal transformation, which is transformed from an amorphous phase to an iron phosphate dihydrate crystal state, causing the first slurry to change color, and the remaining unoxidized ferrous iron ions are added dropwise with the second oxidant to continue the oxidation reaction.

In some embodiments, washing is countercurrent washing.

And/or, a drying temperature is 90°C -110°C, and a drying time is 2 h-12 h.

And/or, a sintering temperature is 550°C -650°C, and a sintering time is 1 h-8 h.

In these embodiments, solid-liquid separation is performed on the second slurry to obtain a ferric phosphate solid material, ions such as phosphate ions left on a surface are removed through washing, water for washing is removed through drying, and an anhydrous ferric phosphate product is obtained after sintering.

In some embodiments, a raw material of the ferrous sulphate solution is a titanium dioxide by-product.

And/or, a molar concentration of the ferrous sulphate solution is 0.5 mol/L-1.5 mol/L.

In these embodiments, by regulating and controlling a source of the ferrous sulphate solution, the raw material is easy to obtain, and the process cost is reduced; and by regulating and controlling a concentration of the ferrous iron ions, the reaction rate for producing the ferric phosphate is controlled to not be too fast, so as to obtain the ferric phosphate product with more uniform particle sizes.

In a second aspect, an embodiment of this disclosure provides low-impurity ferric phosphate, which is prepared by using the preparation method in any of the above embodiments. Content of an impurity element Mg in the prepared low-impurity ferric phosphate is less than or equal to 40 ppm, and content of an impurity element Mn is less than or equal to 60 ppm.

In the technical solution of the embodiment of this disclosure, by optimizing a process of preparing the ferric phosphate, precipitation of impurities such as Mg, Mn, etc. is suppressed through the two-step oxidation process, such that phosphorus utilization in the wet-process phosphoric acid is greatly improved, and the prepared anhydrous ferric phosphate has a low impurity content.

In a third aspect, an embodiment of this disclosure provides a lithium iron phosphate cathode electrode material, which is prepared by using the low-impurity ferric phosphate as a precursor. Since the content of impurities in the ferric phosphate is low, the purity of a lithium iron phosphate cathode electrode material is improved, thereby obtaining better electrochemical performance.

In a fourth aspect, an embodiment of this disclosure provides a cathode electrode sheet, including a cathode electrode current collector and a cathode electrode active layer arranged on at least one side of the cathode electrode current collector. The cathode electrode active layer includes the lithium iron phosphate cathode electrode material in the above embodiments. Because of the improvement of the electrochemical performance of the lithium iron phosphate cathode electrode material, the cathode electrode sheet is provided with excellent electrochemical performance.

In a fifth aspect, an embodiment of this disclosure provides a secondary battery, including the cathode electrode sheet. Based on the excellent electrochemical performance of the cathode electrode sheet, the electrochemical performance of a secondary battery product can be further improved.

The above descriptions are only an overview of the technical solutions of this disclosure. In order to have a clearer understanding of the technical means of this disclosure, and implement same according to the contents of the specification and in order to make the above and other purposes, features, and advantages of this disclosure more obvious and easier to understand, the specific embodiments of this disclosure are specifically listed below.

### Brief Description of the Drawings

In order to more clearly explain the technical solutions of this disclosure, a brief introduction will be given below to the drawings required to be used in this disclosure. It is apparent that the drawings in the following descriptions are merely some embodiments of this disclosure. Other drawings can be obtained from those ordinarily skilled in the art according to these drawings without any creative work.
Fig 1 shows a flowchart of a method for preparing low-impurity ferric phosphate provided in embodiments of this disclosure;
Fig 2 shows a schematic diagram of a process flow of a method for preparing low-impurity ferric phosphate provided in embodiments of this disclosure;
Fig 3 shows a test result diagram of a scanning electron microscope of ferric phosphate in Example 1 of this disclosure;
Fig 4 shows a test result diagram of a scanning electron microscope of ferric phosphate in Example 2 of this disclosure;
Fig 5 shows a test result diagram of a scanning electron microscope of ferric phosphate in Example 3 of this disclosure;
Fig 6 shows a test result diagram of a scanning electron microscope of ferric phosphate in Example 4 of this disclosure;
Fig 7 shows a test result diagram of a scanning electron microscope of ferric phosphate in Example 5 of this disclosure;
Fig 8 shows a test result diagram of a scanning electron microscope of ferric phosphate in Example 6 of this disclosure;
Fig 9 shows a test result diagram of a scanning electron microscope of ferric phosphate in Example 7 of this disclosure;
Fig 10 shows a test result diagram of a scanning electron microscope of ferric phosphate in Example 8 of this disclosure; and
Fig 11 shows a test result diagram of a scanning electron microscope of ferric phosphate in Comparative example 4 of this disclosure.

### Detailed Description of the Embodiments

The embodiments of the technical solutions of this disclosure will be described in detail below in conjunction with the accompanying drawings. The following embodiments are only intended to provide a clearer explanation of the technical solutions of this disclosure, and therefore they are only used as examples and rather than as limitations to the scope of protection of this disclosure.

Unless otherwise defined, all technical and scientific terms as used herein have the same meanings as those commonly understood by those skilled in the technical field of this disclosure; the terms as used herein are only intended for the purpose of describing specific embodiments rather than limiting this disclosure; and the terms "including" and "having" in the description and claims, as well as the accompanying drawings of this disclosure, and any variations thereof, are intended to cover non-exclusive inclusion.

In the description of embodiments of this disclosure, the technical terms "first" and "second", etc., are only used to distinguish different objects and cannot be understood as indicating or implying relative importance or implicitly indicating the number, specific order or primary and secondary relationships of the indicated technical features. In the description of embodiments of this disclosure, "multiple" means more than two, unless otherwise specifically defined explicitly.

Reference to "embodiments" herein means that specific features, structures, or characteristics described in combination with embodiments may be included in at least one embodiment of this disclosure. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of this disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of this disclosure, the term "multiple" refers to more than two (including two), similarly, "multiple groups" refers to more than two groups (including two groups), and "multiple pieces" refers to more than two pieces (including two pieces).

In the description of the embodiments of this disclosure, if the orientation and position relationships indicated by the technical terms "centre", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of this disclosure and simplifying the description, rather than indicating or implying that the device or element referred to thereby must have a specific orientation and be constructed and operated in a specific orientation, and thus it cannot be understood as limitations on the embodiments of this disclosure.

In the description of the embodiments of this disclosure, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those ordinarily skilled in the art, the specific meanings of the above terms in the embodiments of this disclosure can be understood according to the specific situations.

Currently mainstream ferric phosphate synthesis methods all need perform impurity removal on the wet-process phosphoric acid to prepare low-impurity industrial grade phosphate or phosphoric acid, and then prepare the ferric phosphate by using refined high-purity phosphate or phosphoric acid as a phosphorus source. It is known that the wet-process phosphoric acid contains a large number of impurity elements such as Al, Mg, Mn, Zn, etc., and in the process of removing the impurities, a large amount of phosphorus and impurity cations tend to produce phosphate precipitates that are filtered out, directly resulting in the waste of large amounts of phosphorus resources.

In order to improve comprehensive utilization of phosphorus in the raw material, an embodiment of this disclosure provides a method for preparing low-impurity ferric phosphate. Through a process route of stepwise oxidation scheme, precipitation of Mg and Mn is avoided, such that phosphorus utilization in the wet-process phosphoric acid is greatly improved, an alkali use amount is reduced, the production cost of the ferric phosphate is reduced, and the prepared anhydrous ferric phosphate has a low impurity content.

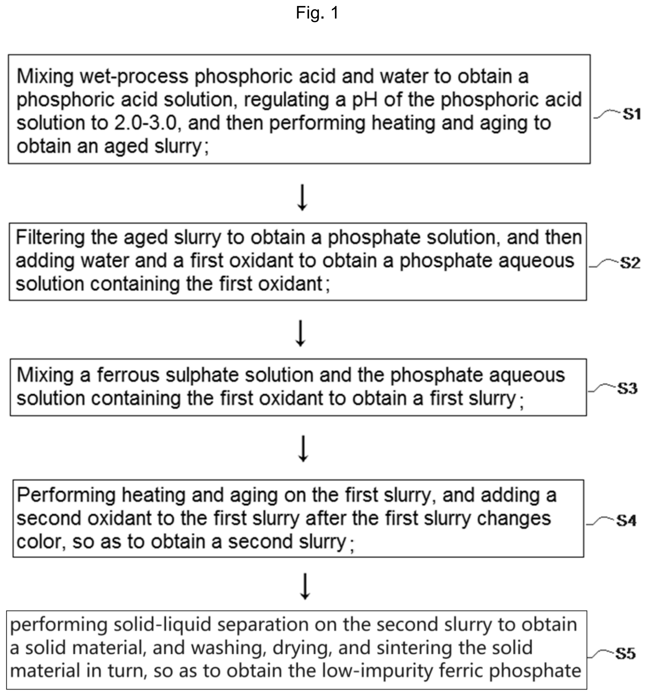

Referring to Fig 1, in a first aspect, an embodiment of this disclosure provides a method for preparing low-impurity ferric phosphate, including the following steps:
S1, mixing wet-process phosphoric acid and water to obtain a phosphoric acid solution, regulating a pH of the phosphoric acid solution to 2.0-3.0, and then performing heating and aging to obtain an aged slurry;
S2, filtering the aged slurry to obtain a phosphate solution, and then adding water and a first oxidant to obtain a phosphate aqueous solution containing the first oxidant;
S3, mixing a ferrous sulphate solution and the phosphate aqueous solution containing the first oxidant to obtain a first slurry;
S4, performing heating and aging on the first slurry, and adding a second oxidant to the first slurry after the first slurry changes color, so as to obtain a second slurry;
S5, performing solid-liquid separation on the second slurry to obtain a solid material, and washing, drying, and sintering the solid material in turn, so as to obtain the low-impurity ferric phosphate.

Further, in S1 of this disclosure, a wet-process phosphoric acid sample is used as a raw material; an aluminum removal process is first performed to obtain the aged slurry. Specifically, a method for preparing the phosphate aqueous solution containing the first oxidant includes: mixing the wet-process phosphoric acid and water to obtain the phosphoric acid solution containing phosphorus with a mass fraction being 5% to 10%; and regulating a pH value of the phosphoric acid solution to 2.0-3.0, and then performing heating and aging to obtain the aged slurry.

Specifically, the mass fraction of the phosphorus in the phosphoric acid solution may be 5%, 8%, 10%, etc. When the pH value of the phosphoric acid solution is regulated, lye used may be an ammonia water, a sodium hydroxide solution, etc., but is not limited herein. By regulating and controlling the addition amount of the lye, a pH value of a system after the pH value is regulated may be 2.0, 2.5, 3.0, etc.

In some embodiments, a temperature for heating and aging is controlled to be 85°C -95°C, and a time for heating and aging is 1 h-4 h. Heating and aging is performed after the pH value is regulated to meet a requirement, the aged temperature may be controlled to be 85°C, 90°C, 95°C, etc., and the aged time may be 1 h, 2 h, 3 h, 4 h, etc.

In S2, the aged slurry is filtered to obtain the phosphate solution; the first oxidant and the water are added to the phosphate solution, and the concentration of the phosphorus is regulated and controlled to obtain the phosphate aqueous solution containing the first oxidant.

It is to be noted that, the pH value of the phosphoric acid solution is regulated to 2.0-3.0, and after heating and aging is performed, aluminum is deposited first by using a solubility product difference between ferric phosphate and aluminum phosphate, such that the purpose of removing the aluminum is achieved. Solid-liquid separation is performed, by means of filtration, on the reaction slurry that has been subjected to heating and aging, so as to obtain aluminum-containing filter residues and the phosphate solution. The aluminum-containing filter residues enter other processes to recycle aluminum, the phosphate solution, the first oxidant, and the water are mixed, and the concentration of phosphate and the use amount of the first oxidant meet process requirements, so as to obtain the phosphate aqueous solution containing the first oxidant.

In these embodiments of this disclosure, only aluminum impurities in the wet-process phosphoric acid are separated, the large number of Mg and Mn impurities in the wet-process phosphoric acid present in the form of ions, such that the Mg and Mn impurities are prevented from forming their phosphate salts to consume the phosphorus, thereby improving phosphorus utilization. Compared to a process route (a pH value being 4.0-5.0) of using the wet-process phosphoric acid to prepare monoammonium phosphate, in these embodiments of this disclosure, the pH value (2.0-3.0) of the phosphoric acid solution is regulated to be relatively low, such that the use amount of partial ammonia water is reduced.

In some embodiments, in the phosphate aqueous solution containing the first oxidant, the molar concentration of the phosphate is 1.0 mol/L-2.5 mol/L, for example, may be 1.0 mol/L, 1.5 mol/L, 2.0 mol/L, or 2.5 mol/L. By regulating and controlling the concentrations of the phosphoric acid solution and the phosphate aqueous solution, a reaction rate during the synthesis of the ferric phosphate is controlled, so as to cause the reaction rate to not be too fast, thereby improving product uniformity. The addition amount of the first oxidant is determined according to the content of ferrous ions in the ferrous sulphate solution, and the molar ratio of the first oxidant in the phosphate aqueous solution to the ferrous ions in the ferrous sulphate solution is (0.7-0.9):2, for example, may be 0.7:2, 0.8:2, 0.9:2, etc. That is to say, when the phosphate aqueous solution containing the first oxidant is prepared, the addition amount of the first oxidant is controlled to be 0.7-0.9 times a total amount of fully-oxidized ferrous iron.

In some embodiments, the first oxidant is selected from one of hydrogen peroxide, ammonium persulfate, and sodium persulfate, may be any one of the above, and is suitable for oxidation of the ferrous iron ions.

Specifically, before S3, the ferrous sulphate solution also needs to be provided. In this disclosure, the ferrous sulphate solution is unlimited in source, for example, may be a ferrous sulphate solution that is obtained by a titanium dioxide by-product through refinement and impurity removal, and then the ferrous sulphate solution is diluted with pure water. By regulating and controlling the source of the ferrous sulphate solution, raw materials are easy to obtain, and the process cost is reduced. In these embodiments, a molar concentration of the ferrous iron in the prepared ferrous sulphate solution may be 0.5 mol/L-1.5 mol/L, for example, may be 0.5 mol/L, 1.0 mol/L, 1.5 mol/L, etc. By regulating and controlling a concentration of the ferrous iron ions, the reaction rate for producing the ferric phosphate may be regulated and controlled, so as to obtain the ferric phosphate product with more uniform particle sizes.

Specifically, in S3, the phosphate aqueous solution containing the first oxidant may be dropwise added to the ferrous sulphate solution, an addition time is 10 min-60 min, and a reaction continues to be performed for 10 min-60 min after addition is completed, so as to cause the first oxidant to fully react. Preferably, the ferrous sulphate solution is used as a base solution, a reaction is performed by means of dropwise adding the phosphate aqueous solution containing the first oxidant, and the first oxidant is slowly added, such that the reaction rate is controlled, and the ferric phosphate is uniformly precipitated. The addition time of the phosphate aqueous solution containing the first oxidant may be 10 min, 20 min, 30 min, 40 min, 50 min, 60 min, etc., and the time to continue the reaction after addition is completed may be 10 min, 20 min, 30 min, 40 min, 50 min, 60 min, etc.

It is to be noted that, during a first stage of an oxidation reaction, the use amount of the first oxidant is 0.7-0.9 times the total amount of fully-oxidized ferrous iron, the use amount of the first oxidant is insufficient to completely oxidize the ferrous iron ions, and the ferrous iron is fully oxidized after a subsequent second stage of the oxidation reaction.

Specifically, in S4, heating and aging is performed on the first slurry, and a second oxidant is added to the first slurry for the second stage of the oxidation reaction after the first slurry changes color, so as to obtain a second slurry after the reaction. The reason why the first slurry changes color is mainly due to the transformation of ferric phosphate from an amorphous phase to an iron phosphate dihydrate crystal state. In these embodiments of this disclosure, the oxidant is added in two steps, the presence of trace amounts of ferric ions in the system during color changing suppresses precipitation of impurity ions, such that the overall process does not require a complex impurity removal process, and phosphorus utilization in the wet-process phosphoric acid is greatly improved.

In some embodiments, the first oxidant and the second oxidant are both independently selected from one of hydrogen peroxide, ammonium persulfate, and sodium persulfate. The first oxidant and the second oxidant may be the same or different. When the above several oxidants complete oxidize the ferrous iron ions, molar ratios of the oxidants to the ferrous iron ions are all 1:2.

In some embodiments, a molar ratio of the second oxidant dropwise added to the first slurry to the ferrous ions in the ferrous sulphate solution is (0.2-0.5):2; and at the same time, a molar ratio of total amount of the first oxidant and the second oxidant to the ferrous ions in the ferrous sulphate solution is controlled to be (1.1-1.4):2. That is to say, a total use amount of the oxidant of the two-stage oxidation reaction is at a slight overdose, the amount of the second oxidant added during the second stage of the oxidation reaction is 0.2-0.5 times the total amount of fully-oxidized ferrous iron, and by controlling the reaction process more accurately, ferrous iron is fully converted into ferric iron, such that introduction of manganese and magnesium in the ferric phosphate product is reduced at the same time.

Specifically, according to the amount of the ferrous ions in the prepared ferrous sulphate solution, the amount of the second oxidant dropwise added to the first slurry is calculated, and the molar ratio of the second oxidant dropwise added to the first slurry to the ferrous ions in the oxidized ferrous sulphate solution may be controlled to be 0.1:2, 0.2:2, 0.3:2, 0.4:2, 0.5:2, etc. That is to say, the amount of the second oxidant required during the second stage of the oxidation reaction may be calculated according to the use amount of the second oxidant theoretically required to fully oxidize the ferrous ions in the ferrous sulphate solution, and the amount of the second oxidant dropwise added to the first slurry is 0.2-0.5 times a theoretical use amount.

Specifically, the total amount of the first oxidant and the second oxidant may also be calculated according to the amount of the ferrous ions in the prepared ferrous sulphate solution, and a molar ratio of the total amount of the oxidant added in two steps to the ferrous ions in the ferrous sulphate solution may be controlled to be 1.1:2, 1.2:2, 1.3:2, 1.4:2, etc. When the molar ratio of the oxidant to the ferrous iron ions is 1:2, the oxidant may fully oxidize the ferrous iron ions, and in these embodiments of this disclosure, the total use amount of the oxidant during two-step reaction is controlled to be 1.1-1.4 times the theoretical use amount.

In some embodiments, heating and aging is performed on the first slurry, an aging temperature is controlled to be 80 °C -95°C, after the first slurry changes from a light white color to a light pink color, a peristaltic pump may be used to dropwise add the second oxidant to the slurry after color changing is completed, and after the second oxidant dropwise addition is completed, a time for continuously holding at a temperature is controlled to be 30 min-90 min. The first slurry is heated and aged for crystal transformation, which is transformed from an amorphous phase to an iron phosphate dihydrate crystal state to cause the first slurry to change color, and then, the second oxidant is then added dropwise to continue the oxidation reaction.

Specifically, when heating and aging is performed on the first slurry, the aging temperature may be controlled to be 80 °C, 85 °C, 90°C, 95°C, etc., and after the second oxidant dropwise addition is completed, a time for continuously holding at a temperature is controlled to be 30 min, 40 min, 50 min, 60 min, 70 min, 80 min, 90 min, etc. Specifically, in S5, iron phosphate dihydrate in the second slurry is separated, and the low-impurity ferric phosphate may be prepared through processes such as impurity removal, sintering, etc.

In some embodiments, solid-liquid separation is performed on the second slurry, the obtained solid material is washed, dried, and sintered in turn, ions such as phosphate radicals left on a surface are removed through washing, water for washing is removed through drying, and an anhydrous ferric phosphate product is obtained after sintering.

In some embodiments, washing may be countercurrent washing, such that the solid material may be in full contact with the water for washing, the ions such as phosphate radicals left on the surface are fully removed, the water for washing is removed through drying, and the anhydrous ferric phosphate product is obtained after sintering.

In some embodiments, a drying temperature is 90 °C -110 °C, and a drying time is 2 h-12 h. Within the drying temperature and time range, the water for washing on the surface of the solid material can be fully removed without affecting crystal morphology of the ferric phosphate. Specifically, the drying temperature may be 90°C, 95°C, 100 °C, 105 °C, or 110 °C, and the drying time may be 2 h, 5 h, 8 h, 10 h, 12 h, etc.

In some embodiments, a sintering temperature is 550 °C -650 °C, and a sintering time is 1 h-8 h. Within the sintering temperature and sintering time ranges, the iron phosphate dihydrate can lose crystal water to obtain the anhydrous ferric phosphate product. Specifically, the sintering temperature may be 550 °C, 600 °C, 650 °C, etc., and the sintering time may be 1 h, 3 h, 5 h, 8 h, etc.

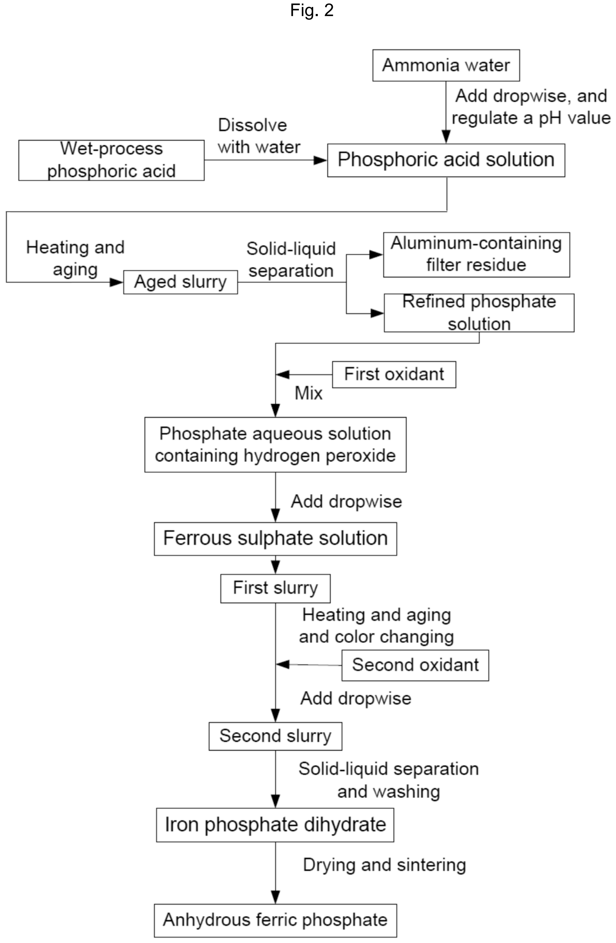

According to the above analysis, referring to Fig 2, the preparation method provided in this disclosure mainly includes the following steps: dissolving the wet-process phosphoric acid with water to obtain the phosphoric acid solution, dropwise adding ammonia water to the phosphoric acid solution to regulate the pH value to meet a requirement, and then performing heating and aging to obtain an aged slurry; performing solid-liquid separation on the aged slurry to obtain aluminum-containing filter residues and the refined phosphate solution, mixing the refined phosphate solution and the first oxidant to obtain a phosphate aqueous solution containing hydrogen peroxide, and dropwise adding the phosphate aqueous solution containing hydrogen peroxide to the prepared ferrous sulphate solution for the first stage of the oxidation reaction, so as to obtain the first slurry; performing heating and aging on the first slurry, dropwise adding the second oxidant for the second stage of the oxidation reaction after color changing, so as to obtain the second slurry; performing solid-liquid separation and washing on the second slurry to obtain the iron phosphate dihydrate; and drying and sintering the iron phosphate dihydrate to obtain the low-impurity anhydrous ferric phosphate product.

In a second aspect, an embodiment of this disclosure provides low-impurity ferric phosphate, which is prepared by using the above preparation method. Content of an impurity element Mg in the prepared low-impurity ferric phosphate is less than or equal to 40 ppm, and content of an impurity element Mn is less than or equal to 60 ppm. By optimizing a process of preparing the ferric phosphate, precipitation of impurities such as Mg, Mn, etc. is suppressed through the two-step oxidation process, such that phosphorus utilization in the wet-process phosphoric acid is greatly improved, and the prepared anhydrous ferric phosphate has a low impurity content.

It is to be noted that, "low-impurity" means that the ferric phosphate product has a low impurity content. The main impurities are Mg and Mn, the content of Mg is less than or equal to 40 ppm, and the content of Mn is less than or equal to 60 ppm. In addition to Mg and Mn, the ferric phosphate product also contains other impurities, such as Na, Ni, Pb, etc., but the content is small, generally less than 12 ppm.

In a third aspect, an embodiment of this disclosure provides a lithium iron phosphate cathode electrode material, which is prepared by using the low-impurity ferric phosphate as a precursor. Exemplarily, the low-impurity ferric phosphate, a lithium salt, and a carbon source are used as raw materials, and the lithium iron phosphate cathode electrode material is prepared through ball milling, drying, and roasting.

Since the content of impurities in the ferric phosphate is low, the purity of a lithium iron phosphate cathode electrode material is improved, thereby obtaining better electrochemical performance.

In a fourth aspect, an embodiment of this disclosure provides a cathode electrode sheet, including a cathode electrode current collector and a cathode electrode active layer arranged on at least one side of the cathode electrode current collector. The cathode electrode active layer includes the lithium iron phosphate cathode electrode material. Because of the improvement of the electrochemical performance of the lithium iron phosphate cathode electrode material, the cathode electrode sheet is provided with excellent electrochemical performance.

In a fifth aspect, an embodiment of this disclosure provides a secondary battery, including the cathode electrode sheet. The secondary battery may further include an anode electrode sheet, electrolyte, a diaphragm, etc., so as to form a complete battery structure. Based on the excellent electrochemical performance of the cathode electrode sheet, the electrochemical performance of a secondary battery product can be further improved.

Some specific embodiments are listed below. It should be noted that the embodiments described below are exemplary and are only intended to explain this disclosure, which cannot be understood as limitations to this disclosure. If no specific technology or conditions are indicated in the examples, the technology or conditions described in the literature in the art or the product specification shall be followed. The reagents or instruments used of which the manufacturers are not indicated are conventional products that are commercially available.

### Example 1

This example provided a method for preparing low-impurity ferric phosphate, including the following steps.
(1) Preparation of a ferrous sulphate solution: a titanium dioxide by-product was taken, refined, and subjected to impurity removal to obtain the ferrous sulphate solution, and pure water was added to prepare the ferrous sulphate solution with a molar concentration being 1.0 mol/L for later use.
(2) Preparation of a refined phosphate solution: 484.49g of a wet-process phosphoric acid sample (a mass fraction being 78.25%, and detailed components referring to Table 1) was taken, the pure water was added to prepare a phosphoric acid solution with a phosphorus mass fraction of 8.0%, ammonia water was dropwise added to the phosphoric acid solution in a stirring state to regulate a pH value of a system to 2.5, after the pH value is regulated, a reaction solution was heated to 90 °C and aged for 2.0 h, and a slurry was filtered after aging is completed, so as to obtain the refined phosphate solution.

Filter residues were dried and weighed to a mass of 31.48 g, and a phosphorus content was detected to be 20.88%. A phosphorus loss was calculated according to total phosphorus mass brought by the filter residues, and a phosphorus loss rate was 5.48%.
(3) Preparation of a phosphate aqueous solution containing a first oxidant: the refined phosphate solution in step (2) was taken, the pure water and hydrogen peroxide were added, a molar ratio of the addition amount of the hydrogen peroxide to ferrous ions in the ferrous sulphate solution in step (1) was 0.84:2 (i.e., an addition ratio of the hydrogen peroxide was 0.84 times total amount of fully-oxidized ferrous iron), and the phosphate solution with a phosphorus molar concentration being 2.0 mol/L was prepared for later use.
(4) A first stage of an oxidation reaction: a reactor was opened for stirring, 200 mL of the ferrous sulphate solution in step (1) was used as a base solution, a peristaltic pump was used to dropwise add 100 mL of the phosphate aqueous solution containing the first oxidant in step (3) to the reactor within 30 min, and a reaction continued for 30 min after addition was completed, so as to obtain a first slurry.
(5) A second stage of an oxidation reaction: heating and aging was performed on the first slurry in step (4), an aging temperature was set to 90 °C, after a reaction slurry changed from a light white color to a light pink color, the peristaltic pump was used to continuously dropwise add the hydrogen peroxide to the slurry after color changing was completed, a molar ratio of the hydrogen peroxide dropwise added to the ferrous ions in the ferrous sulphate solution was 0.36:2 (i.e., the addition ratio of the hydrogen peroxide was 0.36 times the total amount of fully-oxidized ferrous iron), and a temperature was continuously held for 60 min after addition was completed, so as to obtain a second slurry.
(6) Preparation of anhydrous ferric phosphate: the second slurry in step (5) was filtered, countercurrent washing was performed, drying was performed at 95 °C for 6 h, and sintering was performed at 600 °C for 4 h, so as to obtain the anhydrous ferric phosphate.

### Example 2

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.7:2; and a molar ratio of the hydrogen peroxide ② dropwise added in step (5) to the ferrous ions in the ferrous sulphate solution was 0.5:2.

### Example 3

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.9:2; and a molar ratio of the hydrogen peroxide ② dropwise added in step (5) to the ferrous ions in the ferrous sulphate solution was 0.3:2.

### Example 4

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.8:2; and a molar ratio of the hydrogen peroxide ② dropwise added in step (5) to the ferrous ions in the ferrous sulphate solution was 0.4:2.

### Example 5

This example provided a method for preparing low-impurity ferric phosphate, including the following steps.
(1) Preparation of a ferrous sulphate solution: a titanium dioxide by-product was taken, refined, and subjected to impurity removal to obtain the ferrous sulphate solution, and pure water was added to prepare the ferrous sulphate solution with a molar concentration being 0.5mol/L for later use.
(2) Preparation of a refined phosphate solution: 484.49g of a wet-process phosphoric acid sample (a mass fraction being 78.25%, and detailed components referring to Table 1) was taken, the pure water was added to prepare a phosphoric acid solution with a phosphorus mass fraction of 5.0%, ammonia water was dropwise added to the phosphoric acid solution in a stirring state to regulate a pH value of a system to 2.0, after the pH value is regulated, a reaction solution was heated to 85°C and aged for 4.0 h, and a slurry was filtered after aging is completed, so as to obtain the refined phosphate solution.
(3) Preparation of a phosphate aqueous solution containing a first oxidant: the refined phosphate solution in step (2) was taken, the pure water and hydrogen peroxide were added, a molar ratio of the addition amount of the hydrogen peroxide to ferrous ions in the ferrous sulphate solution in step (1) was 0.7:2 (i.e., an addition ratio of the hydrogen peroxide was 0.7 times total amount of fully-oxidized ferrous iron), and the phosphate solution with a phosphorus molar concentration being 1.0mol/L was prepared for later use.
(4) A first stage of an oxidation reaction: a reactor was opened for stirring, 200 mL of the ferrous sulphate solution in step (1) was used as a base solution, a peristaltic pump was used to dropwise add 100 mL of the phosphate aqueous solution containing the first oxidant in step (3) to the reactor within 10min, and a reaction continued for 60min after addition was completed, so as to obtain a first slurry.
(5) A second stage of an oxidation reaction: heating and aging was performed on the slurry after the reaction in step (4), an aging temperature was set to 80 °C, after a reaction slurry changed from a light white color to a light pink color, the peristaltic pump was used to continuously dropwise add the hydrogen peroxide to the slurry after color changing was completed, a molar ratio of the hydrogen peroxide dropwise added to the ferrous ions in the ferrous sulphate solution was 0.5:2 (i.e., the addition ratio of the hydrogen peroxide was 0.5 times the total amount of fully-oxidized ferrous iron), and a temperature was continuously held for 30min after addition was completed, so as to obtain a second slurry.
(6) Preparation of anhydrous ferric phosphate: the second slurry in step (5) was filtered, countercurrent washing was performed, drying was performed at 90 °C for 12 h, and sintering was performed at 550 °C for 8 h, so as to obtain the anhydrous ferric phosphate.

### Example 6

This example provided a method for preparing low-impurity ferric phosphate, including the following steps.
(1) Preparation of a ferrous sulphate solution: a titanium dioxide by-product was taken, refined, and subjected to impurity removal to obtain the ferrous sulphate solution, and pure water was added to prepare the ferrous sulphate solution with a molar concentration being 1.5mol/L for later use.
(2) Preparation of a refined phosphate solution: 484.49g of a wet-process phosphoric acid sample (a mass fraction being 78.25%, and detailed components referring to Table 1) was taken, the pure water was added to prepare a phosphoric acid solution with a phosphorus mass fraction of 10.0%, a sodium hydroxide solution was dropwise added to the phosphoric acid solution in a stirring state to regulate a pH value of a system to 3.0, after the pH value is regulated, a reaction solution was heated to 95 °C and aged for 1.0 h, and a slurry was filtered after aging is completed, so as to obtain the refined phosphate solution.
(3) Preparation of a phosphate aqueous solution containing a first oxidant: the refined phosphate solution in step (2) was taken, the pure water and hydrogen peroxide ① were added, a molar ratio of the addition amount of the hydrogen peroxide to ferrous ions in the ferrous sulphate solution in step (1) was 0.9:2 (i.e., an addition ratio of the hydrogen peroxide was 0.9 times total amount of fully-oxidized ferrous iron), and the phosphate solution with a phosphorus molar concentration being 2.5mol/L was prepared for later use.
(4) A first stage of an oxidation reaction: a reactor was opened for stirring, 200 mL of the ferrous sulphate solution in step (1) was used as a base solution, a peristaltic pump was used to dropwise add 100 mL of the phosphate aqueous solution containing the first oxidant in step (3) to the reactor within 60min, and a reaction continued for 10min after addition was completed, so as to obtain a first slurry.
(5) A second stage of an oxidation reaction: heating and aging was performed on the slurry after the reaction in step (4), an aging temperature was set to 95°C, after a reaction slurry changed from a light white color to a light pink color, the peristaltic pump was used to continuously dropwise add the hydrogen peroxide to the slurry after color changing was completed, a molar ratio of the hydrogen peroxide dropwise added to the ferrous ions in the ferrous sulphate solution was 0.3:2 (i.e., the addition ratio of the hydrogen peroxide was 0.3 times the total amount of fully-oxidized ferrous iron), and a temperature was continuously held for 90min after addition was completed, so as to obtain a second slurry.
(6) Preparation of anhydrous ferric phosphate: the second slurry in step (5) was filtered, countercurrent washing was performed, drying was performed at 110 °C for 2 h, and sintering was performed at 650 °C for 1 h, so as to obtain the anhydrous ferric phosphate.

### Example 7

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.9:2; and a molar ratio of the hydrogen peroxide ② dropwise added in step (5) to the ferrous ions in the ferrous sulphate solution was 0.2:2.

### Example 8

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.9:2; and a molar ratio of the hydrogen peroxide ② dropwise added in step (5) to the ferrous ions in the ferrous sulphate solution was 0.5:2.

### Comparative example 1

A difference between this example and Example 1 lied in that an addition mode of the hydrogen peroxide in phosphate was based on a traditional one-step method scheme, and the addition ratio of the hydrogen peroxide was 1.2 times the total amount of fully-oxidized ferrous iron, so as to ensure that the ferrous iron in the system was fully oxidized. Other steps were the same as those in the example. Specific steps were shown as follows.
(1) Preparation of a ferrous sulphate solution was the same as Example 1.
(2) Preparation of a refined phosphate solution was the same as Example 1.
(3) Preparation of phosphate: the refined phosphate solution in step (2) was taken, the pure water and hydrogen peroxide ① (an addition ratio of the hydrogen peroxide was 1.20 times total amount of fully-oxidized ferrous iron) were added, and a phosphate solution with a phosphorus molar concentration being 2.0mol/L was prepared for later use.
(4) Synthesis of ferric phosphate: a reactor was opened for stirring, 200 mL of the ferrous sulphate solution in step (1) was used as a base solution, a peristaltic pump was used to dropwise add 100 mL of the phosphate to the reactor within 30 min, and a reaction continued for 30 min after addition was completed.
(5) Crystal transformation: heating and aging was performed on the slurry after the reaction in step (4), an aging temperature was set to 90 °C, after a reaction slurry changed from a light white color to a light pink color, a temperature was continuously held for 60 min.
(6) Preparation of anhydrous ferric phosphate: the slurry after the reaction in step (5) was filtered, countercurrent washing was performed, drying was performed at 95 °C for 6 h, and sintering was performed at 600 °C for 4 h, so as to obtain the anhydrous ferric phosphate.

### Comparative example 2

Wet-process phosphoric acid in this comparative example used a conventional phosphoric acid impurity removal scheme, i.e., a pH value of the wet-process phosphoric acid was first regulated to 7.0, filtration was performed, and then refined phosphoric acid was used to regulate the pH value of the phosphate to 2.0-3.0. An addition mode of the hydrogen peroxide in phosphate was based on a traditional one-step method scheme, and the addition ratio of the hydrogen peroxide was 1.2 times the total amount of fully-oxidized ferrous iron, so as to ensure that the ferrous iron in the system was fully oxidized. Other steps were the same as those in the example, and specific steps were shown as follows.
(1) Preparation of a ferrous sulphate solution: a titanium dioxide by-product was taken, refined, and subjected to impurity removal to obtain the ferrous sulphate solution, and pure water was added to prepare the ferrous sulphate solution with a ferrous iron molar concentration being 1.0 mol/L for later use.
(2) Preparation of a refined phosphate solution: 484.49g of a wet-process phosphoric acid sample (a mass fraction being 78.25%) was taken, the pure water was added to prepare a phosphoric acid solution with a phosphorus mass fraction of 8.0%, ammonia water was dropwise added to the phosphoric acid solution in a stirring state to regulate a pH value of a system to 7.0, after the pH value is regulated, a reaction solution was heated to 90 °C and aged for 2.0 h, a slurry was filtered after aging is completed, and a pH value of filtrate was regulated to 2.5 by using the refined phosphoric acid, so as to obtain the refined phosphate solution.

Filter residues were dried and weighed to a mass of 73.01g, and a phosphorus content was detected to be 22.90%. A phosphorus loss was calculated according to total phosphorus mass brought by the filter residues, and a phosphorus loss rate was 13.95%.
(3) Preparation of phosphate: the refined phosphate solution in step (2) was taken, the pure water and hydrogen peroxide (an addition ratio of the hydrogen peroxide was 1.20 times total amount of fully-oxidized ferrous iron) were added, and a phosphate solution with a phosphorus molar concentration being 2.0mol/L was prepared for later use.
(4) Synthesis of ferric phosphate: a reactor was opened for stirring, 200 mL of the ferrous sulphate solution in step (1) was used as a base solution, a peristaltic pump was used to dropwise add 100 mL of the phosphate to the reactor within 30 min, and a reaction continued for 30 min after addition was completed.
(5) Crystal transformation: heating and aging was performed on the slurry after the reaction in step (4), an aging temperature was set to 90 °C, after a reaction slurry changed from a light white color to a light pink color, a temperature was continuously held for 60 min.
(6) Preparation of anhydrous ferric phosphate: the slurry after the reaction in step (5) was filtered, countercurrent washing was performed, drying was performed at 95 °C for 6 h, and sintering was performed at 600 °C for 4 h, so as to obtain the anhydrous ferric phosphate.

### Comparative example 3

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.95:2; and a molar ratio of the hydrogen peroxide ② dropwise added in step (5) to the ferrous ions in the ferrous sulphate solution was 0.1:2.

### Comparative example 4

A difference between this example and Example 1 only lied in the addition amount of the hydrogen peroxide in step (3) and step (5). Specifically, in step (3) in this example, a molar ratio of the addition amount of the hydrogen peroxide ① to the ferrous ions in the ferrous sulphate solution in step (1) was 0.6:2; and a molar ratio of the hydrogen peroxide ② dropwise added in step (5) to the ferrous ions in the ferrous sulphate solution was 0.85:2.

In this disclosure, components of the phosphate obtained after refinement in step (2) in the examples and the comparative examples were tested, an element removal rate and a phosphorus loss rate were calculated, and results were shown in Table 2. Components and contents of impurity elements of the anhydrous ferric phosphate prepared in the examples and the comparative examples were tested, and results were shown in Table 3.

**Table 1 Main component testing table for wet-process phosphoric acid**

| Sample name | Conte nt % | Impurity element content/ppm | | | | | | | | | | | | | |
|---|---|---|---|---|---|---|---|---|---|---|---|---|---|---|---|
| | | Al | Ca | Cd | Co | Cr | Cu | K | Mg | Mn | Na | Ni | P b | Ti | Z n |
| Wet-process phosphoric acid | 78.25 | 3140. 02 | 60.2 8 | 1.5 7 | 0.4 1 | 69.7 4 | 1.2 7 | 814. 95 | 13657. 49 | 145. 25 | 77.8 1 | 10.9 1 | 0 | 57.2 5 | 7 9 |

From raw material wet-process phosphoric acid testing results in Table 1, it was seen that main impurity components were Al, Mg, and Mn.

**Table 2 Phosphorus loss and element detection data table of phosphate prepared in examples and comparative examples**

| Sample name | Phosphoru s loss rate | Impurity element content/ppm | | | | | | | | | | | | | |
|---|---|---|---|---|---|---|---|---|---|---|---|---|---|---|---|
| Sample name | % | Al | Ca | Cd | Co | Cr | Cu | K | Mg | Mn | Na | Ni | Pb | Ti | Zn |
| Phosphate in Example 1 | 5.48 | 23. 2 | 18. 45 | 0.6 2 | 0.1 6 | 18. 11 | 0.19 | 279 .97 | 385 9.94 | 47. 12 | 26. 39 | 3.6 3 | 0 | 2.8 7 | 23. 43 |
| Removal efficiency% | | 99. 26 % | 69. 39 % | 60. 51 % | 60. 98 % | 74. 03 % | 85.0 4% | 65. 65 % | 71.7 4% | 67. 56 % | 66. 08 % | 66. 73 % | 0.0 0% | 94. 99 % | 70. 34 % |
| Phosphate in Example 2 | 5.33 | 19. 45 | 11. 94 | 0.3 9 | 0.3 2 | 9.4 3 | 0 | 234 .17 | 361 7.79 | 40. 87 | 14. 34 | 2.3 1 | 0 | 1.3 9 | 19. 44 |
| Removal efficiency% | | 99. 38 % | 80. 19 % | 75. 16 % | 21. 95 % | 86. 48 % | 100. 00% | 71. 27 % | 73.5 1% | 71. 86 % | 81. 57 % | 78. 83 % | 0.0 0% | 97. 57 % | 75. 39 % |
| Phosphate in Example 3 | 6.12 | 17. 26 | 14. 22 | 0.2 5 | 0.1 1 | 7.2 6 | 0 | 215 .33 | 354 1.55 | 35. 56 | 15. 66 | 1.7 5 | 0 | 1.2 1 | 15. 36 |
| Removal efficiency% | | 99. 45 % | 76. 41 % | 84. 08 % | 73. 17 % | 89. 59 % | 100. 00% | 73. 58 % | 74.0 7% | 75. 52 % | 79. 87 % | 83. 96 % | 0.0 0% | 97. 89 % | 80. 56 % |
| Phosphate in Example 4 | 5.86 | 21. 33 | 15. 45 | 0.1 2 | 0.3 6 | 8.1 7 | 0 | 251 .46 | 370 0.12 | 50. 01 | 13. 77 | 3.2 5 | 0 | 2.5 5 | 13. 17 |
| Removal efficiency% | | 99. 32 % | 74. 37 % | 92. 36 % | 12. 20 % | 88. 29 % | **100.** 00% | 69. 14 % | 72.9 1% | 65. 57 % | 82. 30 % | 70. 21 % | 0.0 0% | 95. 55 % | 83. 33 % |
| Phosphate in Example 5 | 5.77 | 15. 21 | 14. 99 | 0.3 8 | 0.1 4 | 14. 31 | 0 | 254 .33 | 358 8.47 | 51. 73 | 15. 73 | 2.3 9 | 0 | 2.3 3 | 21. 22 |
| Removal efficiency% | | 99. 52 % | 75. 13 % | 75. 80 % | 65. 85 % | 79. 48 % | 100. 00% | 68. 79 % | 73.7 3% | 64. 39 % | 79. 78 % | 78. 09 % | 0.0 0% | 95. 93 % | 73. 14 % |
| Phosphate in Example 6 | 5.93 | 21. 17 | 22. 14 | 0.0 7 | 0.1 2 | 16. 61 | 0 | 254 .41 | 354 6.15 | 43. 67 | 16. 45 | 2.9 2 | 0 | 2.5 5 | 21. 68 |
| Removal efficiency% | | 99. 33 % | 63. 27 % | 95. 54 % | 70. 73 % | 76. 18 % | 100. 00% | 68. 78 % | 74.0 4% | 69. 93 % | 78. 86 % | 73. 24 % | 0.0 0% | 95. 55 % | 72. 56 % |
| Phosphate in Example 7 | 6.03 | 21. 2 | 16. 22 | 0.4 0 | 0.1 6 | 7.2 3 | 0 | 260 .44 | 386 1.33 | 51. 23 | 24. 22 | 2.1 3 | 0 | 1.4 2 | 22. 46 |
| Removal efficiency% | | 99. 32 % | 73. 09 % | 74. 52 % | 60. 98 % | 89. 63 % | 100. 00% | 68. 04 % | 71.7 3% | 64. 73 % | 68. 87 % | 80. 48 % | 0% | 97. 52 % | 71. 57 % |
| Phosphate in Example 8 | 5.88 | 16. 22 | 21. 05 | 0.2 3 | 0.1 1 | 10. 01 | 0 | 254 .77 | 376 6.96 | 47. 99 | 27. 06 | 3.0 0 | 0 | 1.9 9 | 24. 12 |
| Removal efficiency% | | 99. 48 % | 65. 08 % | 85. 35 % | 73. 17 % | 85. 65 % | 100. 00% | 68. 74 % | 72.4 2% | 66. 96 % | 65. 22 % | 72. 50 % | 0% | 96. 52 % | 69. 47 % |
| Phosphate in Comparative example 1 | 5.72 | 22. 45 | 17. 86 | 0.2 2 | 0.1 1 | 17. 24 | 0 | 261 .39 | 354 7.12 | 44. 24 | 21. 21 | 3.3 5 | 0 | 2.4 5 | 22. 77 |
| Removal efficiency% | | 99. 29 % | 70. 37 % | 85. 99 % | 73. 17 % | 75. 28 % | 100. 00% | 67. 93 % | 74.0 3% | 69. 54 % | 72. 74 % | 69. 29 % | 0.0 0% | 95. 72 % | 71. 18 % |
| Phosphate in Comparative example 2 | 13.95 | 1.1 2 | 6.4 6 | 0.1 4 | 0.0 1 | 3.7 4 | 0 | 213 .49 | 31.2 8 | 4.1 | 21. 58 | 0.3 5 | 0.0 6 | 0.1 | 12. 07 |
| Removal efficiency% | | 99. 89 % | 67. 85 % | 73. 25 % | 92. 68 % | 83. 91 % | 100. 00% | 21. 41 % | 99.3 1% | 91. 53 % | 16. 80 % | 90. 38 % | 0.0 0% | 99. 48 % | 54. 16 % |
| Phosphate in Comparative example 3 | 5.72 | 20. 12 | 17. 89 | 1.2 2 | 0.2 0 | 8.6 4 | 0 | 236 .1 | 384 1.78 | 45. 21 | 26. 98 | 3.4 2 | 0 | 1.5 5 | 23. 33 |
| Removal efficiency% | | 99. 36 % | 70. 32 % | 22. 29 % | 51. 22 % | 87. 61 % | 100. 00% | 71. 03 % | 71.8 7% | 68. 87 % | 65. 33 % | 68. 65 % | 0% | 97. 29 % | 70. 47 % |
| Phosphate in Comparative | 5.68 | 19. 33 | 25. 42 | 1.4 4 | 0.1 4 | 7.8 7 | 0 | 222 .64 | 376 5.45 | 49. 32 | 24. 54 | 2.9 9 | 0 | 2.0 1 | 22. 79 |
| example 4 | | | | | | | | | | | | | | | |
| Removal efficiency% | | 99. 38 % | 57. 83 % | 8.2 8% | 65. 85 % | 88. 72 % | 100. 00% | 72. 68 % | 72.4 3% | 66. 04 % | 68. 46 % | 72. 59 % | 0% | 96. 49 % | 71. 15 % |

**Table 3 Impurity element detection data table of anhydrous ferric phosphate prepared in examples and comparative examples**

| Sample name | Impurity element content/ppm | | | | | | | | | | | | | |
|---|---|---|---|---|---|---|---|---|---|---|---|---|---|---|
| Sample name | Al | Ca | Cd | Co | Cr | Cu | K | Mg | Mn | Na | Ni | Pb | Ti | Zn |
| Anhydrous ferric phosphate in Example 1 | 6.4 5 | 9.3 9 | 0.0 1 | 0.6 3 | 0 | 0 | 0 | 23.2 | 56.4 7 | 11. 24 | 5.5 7 | 7.4 | 26. 05 | 15. 39 |
| Anhydrous ferric phosphate in Example 2 | 16. 9 | 0 | 0.1 2 | 1 | 4.2 | 0 | 15. 58 | 31.6 7 | 54.5 9 | 18. 37 | 2.6 9 | 11. 68 | 1 | 8 |
| Anhydrous ferric phosphate in Example 3 | 16. 05 | 5.6 9 | 0 | 0.7 9 | 7.3 8 | 0 | 2.5 4 | 28.8 8 | 49.1 2 | 19. 06 | 2.1 9 | 15. 04 | 0.9 8 | 10. 78 |
| Anhydrous ferric phosphate in Example 4 | 15. 9 | 2.3 7 | 0 | 0.8 3 | 3.2 7 | 0 | 10. 25 | 30.6 7 | 49.3 9 | 25. 64 | 2.6 8 | 16. 98 | 1.0 2 | 9.3 6 |
| Anhydrous ferric phosphate in Example 5 | 16. 28 | 2.5 3 | 0 | 0.8 8 | 7.6 8 | 0.0 6 | 5.4 9 | 30.4 2 | 49.5 8 | 22. 35 | 4.0 3 | 13. 94 | 0.9 4 | 9.3 7 |
| Anhydrous ferric phosphate in Example 6 | 16. 9 | 0 | 0.1 2 | 1 | 4.2 | 0 | 15. 58 | 31.6 7 | 54.5 9 | 18. 37 | 2.6 9 | 11. 68 | 1 | 8 |
| Anhydrous ferric phosphate in Example 7 | 14. 87 | 4.0 6 | 0.0 0 | 1.4 3 | 6.9 4 | 0.0 0 | 0.0 0 | 22.6 1 | 39.1 6 | 16. 46 | 4.5 0 | 18. 94 | 0.7 0 | 7.1 8 |
| Anhydrous ferric phosphate in Example 8 | 14. 48 | 4.6 6 | 0.0 7 | 0.8 8 | 10. 32 | 0.0 0 | 2.6 1 | 19.6 9 | 38.2 9 | 11. 39 | 4.6 1 | 8.3 4 | 0.4 6 | 8.1 4 |
| Anhydrous ferric phosphate in Comparative example 1 | 12. 11 | 3.2 4 | 0.4 6 | 2.6 | / | 0 | 4.2 3 | 190. 23 | 248. 91 | 34. 87 | 3.8 | 17. 98 | 0.3 7 | 24. 98 |
| Anhydrous ferric phosphate in Comparative example 2 | 5.1 1 | 0.2 7 | 0 | 1.8 | 0 | 0 | 0 | 91.4 | 233. 29 | 21. 19 | 4.5 9 | 8.1 5 | 2.3 6 | 38. 18 |
| Anhydrous ferric phosphate in Comparative example 3 | 7.4 6 | 4.2 7 | 0.0 0 | 1.9 7 | 6.5 1 | 0.1 6 | 0.0 0 | 53.9 0 | 69.2 6 | 10. 85 | 4.4 8 | 7.6 6 | 3.4 5 | 13. 80 |
| Anhydrous ferric phosphate in Comparative example 4 | 6.7 4 | 0.0 0 | 0.0 5 | 0.9 8 | 5.5 5 | 0.0 0 | 0.0 0 | 42.2 3 | 125. 49 | 17. 66 | 2.4 0 | 5.8 8 | 2.3 3 | 20. 97 |

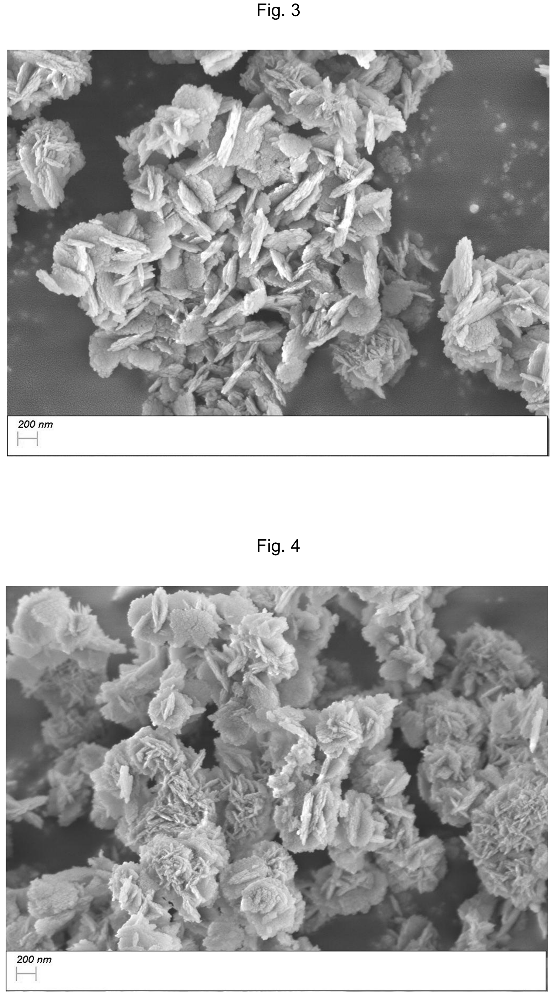

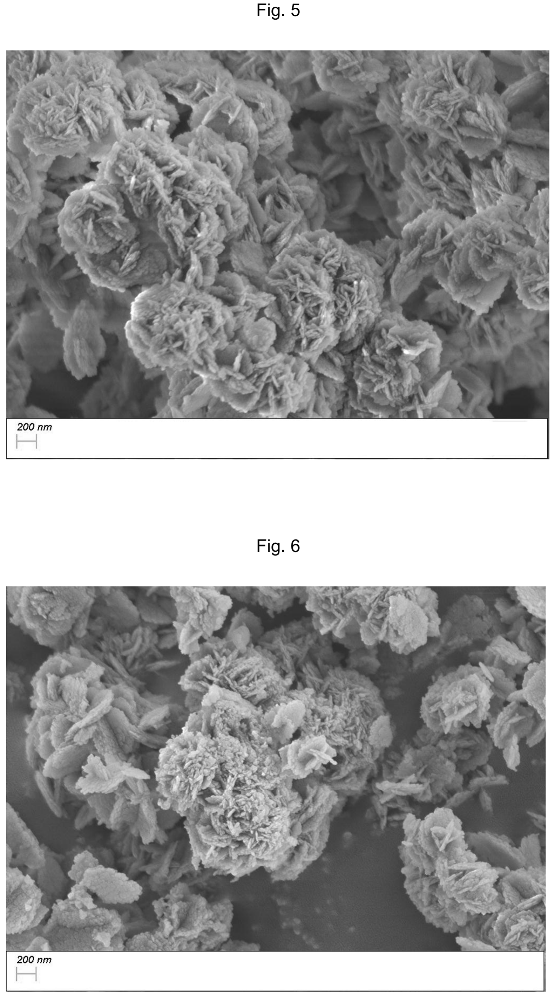

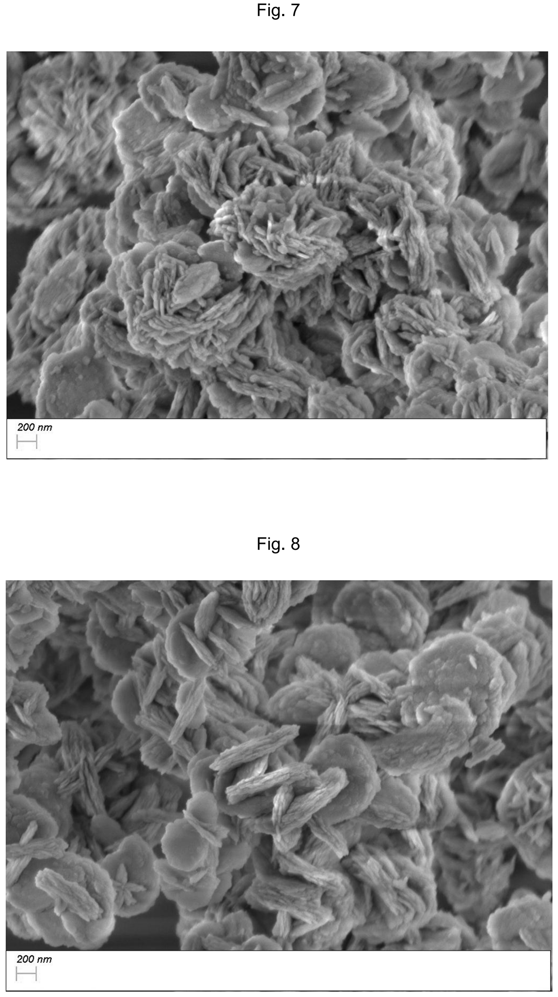

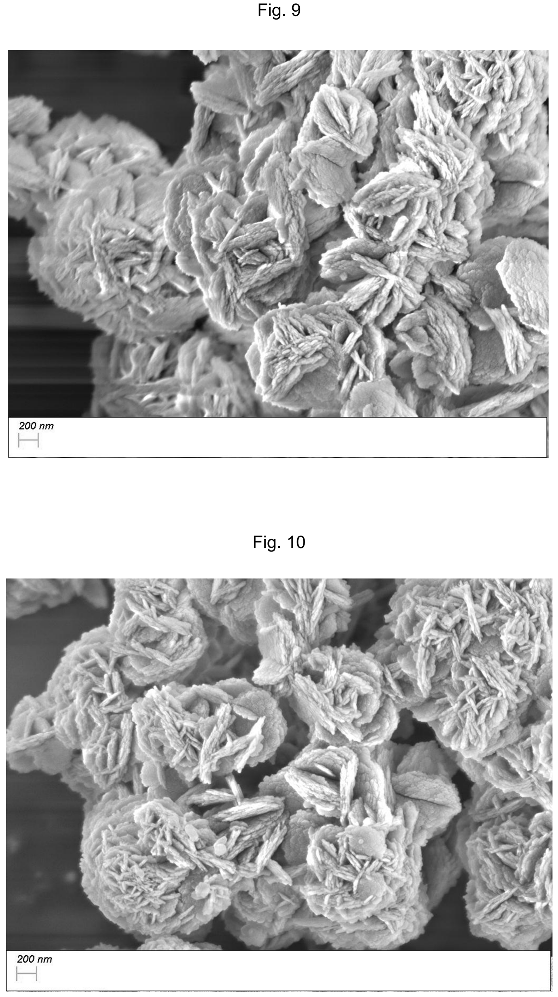

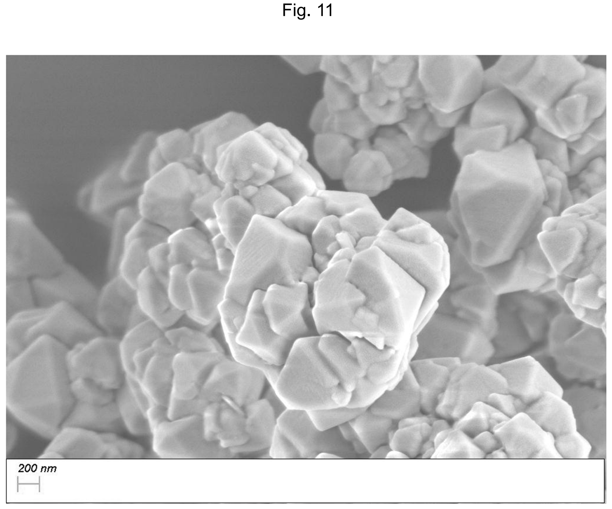

A testing result of a scanning electron microscope of the ferric phosphate in Example 1 was shown in Fig 3; a testing result of a scanning electron microscope of the ferric phosphate in Example 2 was shown in Fig 4; a testing result of a scanning electron microscope of the ferric phosphate in Example 3 was shown in Fig 5; a testing result of a scanning electron microscope of the ferric phosphate in Example 4 was shown in Fig 6; a testing result of a scanning electron microscope of the ferric phosphate in Example 5 was shown in Fig 7; a testing result of a scanning electron microscope of the ferric phosphate in Example 6 was shown in Fig 8; a testing result of a scanning electron microscope of the ferric phosphate in Example 7 was shown in Fig 9; a testing result of a scanning electron microscope of the ferric phosphate in Example 8 was shown in Fig 10; and a testing result of a scanning electron microscope of the ferric phosphate in Comparative example 4 was shown in Fig 11.

By comparing the testing results of the scanning electron microscopes from Example 1 to Example 8 with the testing result of the scanning electron microscope in Comparative example 4, it might be learned that the low-impurity ferric phosphate obtained in Example 1 to Example 8 was presented as flakes, the addition amount of the oxidant in Comparative example 4 was too high, resulting in a small increase in the content of impurity ions, leading to a significant change in a microstructure of the ferric phosphate obtained in Comparative example 4, presented as lumps, with a corresponding decrease in performance.

From Table 2, it might be found that an Al impurity might be well removed by using the method of the embodiments of this disclosure, and the removal efficiency might reach 97.78%. At the same time, Mg and Mn impurities were retained as ions in a liquid phase, so as to reduce the phosphorus loss rate from 13.95% to 5.48%, with a saving magnitude reaching 8.47%, such that the production cost of the ferric phosphate could be significantly reduced to achieve desirable economic benefits.

From Table 3, it might be seen that compare with the preparation of the ferric phosphate using a traditional one-step method, the contents of the Mg and Mn impurities in the anhydrous ferric phosphate might be greatly reduced by using the segmented oxidation scheme provided in the embodiments of this disclosure. The content of Mg reduced from 91.4 ppm to 23.2 ppm, and content of Mn reduced from 233.29 ppm to 56.47 ppm, it indicated that the contents of Mg and Mn in the anhydrous ferric phosphate might be greatly reduced by using the segmented oxidation scheme provided in the embodiments of this disclosure.

From the corresponding result of Comparative example 3 in Table 3, it might be seen that the addition amount of the oxidant was too low, resulting in a significant increase in the contents of the impurity ions Mg and Mn in the anhydrous ferric phosphate.

To sum up, by using the directional impurity removal-segmented oxidation scheme in this disclosure, the loss of a phosphorus resource might be greatly reduced, and the production cost of the ferric phosphate was reduced. At the same time, by using the segmented oxidation scheme, the problem of high Mg and Mn impurity contents in a traditional one-step ferric phosphate preparation process is well solved, an application scenario of a one-step ferric phosphate synthesis process was expanded, such that the prepared ferric phosphate was more suitable for the preparation of high-performance lithium iron phosphate.

It is to be noted that this disclosure is not limited to the aforementioned embodiments. The above embodiments are only illustrative, and embodiments that have the substantially same composition and play the same acting role as the technical idea within the scope of technical solution of this disclosure are all included in the technical scope of this disclosure. In addition, other embodiments constructed by applying various variations that can be thought of by those skilled in the art and by combining some constituent elements of the embodiments without departing from the scope of the main idea of this disclosure are also included in the scope of this disclosure.

## Claims

1. A method for preparing low-impurity ferric phosphate, wherein the preparation method comprises:
mixing wet-process phosphoric acid and water to obtain a phosphoric acid solution, regulating a pH of the phosphoric acid solution to 2.0-3.0, and then performing heating and aging to obtain an aged slurry;
filtering the aged slurry to obtain a phosphate solution, and then adding water and a first oxidant to obtain a phosphate aqueous solution containing the first oxidant;
mixing a ferrous sulphate solution and the phosphate aqueous solution containing the first oxidant to obtain a first slurry;
performing heating and aging on the first slurry, and adding a second oxidant to the first slurry after the first slurry changes color, so as to obtain a second slurry; and
performing solid-liquid separation on the second slurry to obtain a solid material, and washing, drying, and sintering the solid material in turn, so as to obtain the low-impurity ferric phosphate.

2. The preparation method according to claim 1, wherein the first oxidant and the second oxidant are both independently selected from one of hydrogen peroxide, ammonium persulfate, and sodium persulfate.

3. The preparation method according to claim 2, wherein a molar ratio of the first oxidant to ferrous ions in the ferrous sulphate solution is (0.7-0.9):2; and/or
a molar ratio of the second oxidant dropwise added to the first slurry to the ferrous ions in the ferrous sulphate solution is (0.2-0.5):2; and
a molar ratio of total amount of the first oxidant and the second oxidant to the ferrous ions in the ferrous sulphate solution is (1.1-1.4):2.

4. The preparation method according to claim 1, wherein the step of obtaining the aged slurry from the wet-process phosphoric acid comprises:
mixing the wet-process phosphoric acid and water to obtain the phosphoric acid solution containing phosphorus with a mass fraction being 5% to 10%; and
regulating a pH value of the phosphoric acid solution to 2.0-3.0, and then performing heating and aging to obtain the aged slurry.

5. The preparation method according to claim 4, wherein a temperature for heating and aging is 85°C -95°C, and a time for heating and aging is 1 h-4 h.

6. The preparation method according to claim 4, wherein in the phosphate aqueous solution containing the first oxidant, a molar concentration of phosphate is 1.0 mol/L-2.5 mol/L.

7. The preparation method according to claim 1, wherein an addition time for adding the phosphate aqueous solution containing the first oxidant to the ferrous sulphate solution is 10 min-60 min, and a reaction continues to be performed for 10 min-60 min after addition is completed.

8. The preparation method according to claim 1, wherein the step of obtaining the second slurry from the first slurry comprises: performing heating and aging on the first slurry, wherein an aging temperature is 80°C -95°C; and dropwise adding the second oxidant to the first slurry after the first slurry changes color, and holding the first slurry at a temperature for 30 min-90 min to obtain the second slurry.

9. The preparation method according to claim 1, wherein washing is countercurrent washing; and/or
a drying temperature is 90 °C -110°C, and a drying time is 2 h-12 h; and/or
a sintering temperature is 550°C -650°C, and a sintering time is 1 h-8 h.

10. The preparation method according to claim 1, wherein a raw material of the ferrous sulphate solution is a titanium dioxide by-product; and/or
a molar concentration of the ferrous sulphate solution is 0.5 mol/L-1.5 mol/L.

11. Low-impurity ferric phosphate, wherein the low-impurity ferric phosphate is prepared by using the preparation method according to any one of claims 1 to 10, wherein content of an impurity element Mg in the prepared low-impurity ferric phosphate is less than or equal to 40 ppm, and content of an impurity element Mn is less than or equal to 60 ppm.

12. A lithium iron phosphate cathode electrode material, wherein the lithium iron phosphate cathode electrode material is prepared by using the low-impurity ferric phosphate according to claim 11 as a precursor.

13. A cathode electrode sheet, wherein the cathode electrode sheet comprises a cathode electrode current collector and a cathode electrode active layer arranged on at least one side of the cathode electrode current collector, wherein the cathode electrode active layer comprises the lithium iron phosphate cathode electrode material according to claim 12.

14. A secondary battery, wherein the secondary battery comprises the cathode electrode sheet according to claim 13.
